# EUROPÄISCHE PATENTSCHRIFT

(11) **EP 3 298 259 B1**
(45) Veröffentlichungstag und Bekanntmachung des Hinweises auf die Patenterteilung: **04.03.2020**
(21) Anmeldenummer: 16722526.7
(22) Anmeldetag: 10.05.2016
(51) Int. Cl.: F02D 41/00

(54) **VERFAHREN ZUR STOSSFREIEN LASTAUFSCHALTUNG BEI AKTIVIERTER ZYLINDERABSCHALTUNG EINER BRENNKRAFTMASCHINE**
METHOD FOR SMOOTHLY CONNECTING A LOAD DURING AN ACTIVATED CYLINDER DEACTIVATION PROCESS OF AN INTERNAL COMBUSTION ENGINE
PROCÉDÉ DE RACCORDEMENT DE CHARGE SANS À-COUPS EN CAS DE MISE EN OEUVRE DE LA DÉSACTIVATION DE CYLINDRES D'UN MOTEUR A COMBUSTION INTERNE

(30) Priorität: 18.05.2015 DE 102015209012
(43) Veröffentlichungstag der Anmeldung: 28.03.2018
(73) Patentinhaber: MTU Friedrichshafen GmbH, 88045 Friedrichshafen (DE)
(72) Erfinder: KONRAD, Thorsten, 86165 Augsburg (DE); FIMML, Wolfgang, 6912 Hörbranz (AT); BERNHARD, Alexander, 88074 Meckenbeuren (DE)
(74) Vertreter: Kordel, Mattias
(86) Internationale Anmeldenummer: PCT/EP2016/000766
(87) Internationale Veröffentlichungsnummer: WO 2016/184552

(56) Entgegenhaltungen:
- DE-A1- 19 604 737
- DE-A1-102008 005 205
- DE-A1-102013 213 697
- US-A- 4 550 704
- US-A- 5 154 151
- US-A- 5 562 086
- US-A1- 2003 106 524
- US-A1- 2006 005 811

## Beschreibung

Die Erfindung bezieht sich auf ein Verfahren zur stoßfreien Lastaufschaltung bei aktivierter Zylinderabschaltung einer Brennkraftmaschine.

Die Erfindung bezieht sich insbesondere auf ein Verfahren gemäß den Merkmalen des Oberbegriffs des Anspruchs 1.

Beim Betrieb von Brennkraftmaschinen, insbesondere Gasmotoren, mit mehreren Zylindern, die in zwei Zylinderbänken angeordnet sind, ist es bekannt, im unteren Kennfeldbereich, insbesondere im Leerlauf, zur Kraftstoffeinsparung und zur Leistungsoptimierung eine Zylinderabschaltung vorzusehen. Diese Zylinderabschaltung dient insbesondere auch der Schadstoffreduzierung. Derartige Zylinderabschaltungen werden üblicherweise bei Otto-Motoren vorgenommen.

Durch die Abschaltung einzelner Zylinder müssen die restlichen Zylinder die geforderte Leistung der Brennkraftmaschine erzeugen. Hierdurch ergibt sich eine höhere spezifische Zylinderleistung der aktiven Zylinder. Um eine derartige höhere spezifische Leistung bei quantitätsgeregelten Motoren darstellen zu können, ist eine Anhebung des Ladedrucks erforderlich. Diese wird üblicherweise durch eine Änderung der Drosselklappenstellung realisiert. Wenn nun beim Betrieb der Brennkraftmaschine die deaktivierten Zylinder wieder zugeschaltet werden, kommt es zu Momentenstößen, d.h., zu kurzfristigen Erhöhungen des jeweiligen Drehmoments, da der Ladedruck der Brennkraftmaschine noch auf den Betrieb mit der verminderten Zylinderzahl eingeregelt ist. Der Ladedruck wird dann erst bei einer nachfolgenden Einstellung der erforderlichen Leistung der Brennkraftmaschine reduziert.

Aus der deutschen Offenlegungsschrift DE 10 2008 005 205 A1 ist ein Verfahren zum Betreiben einer mehrere Zylinder aufweisenden Brennkraftmaschine bekannt, wobei eine Betriebsführung im Vollmotorbetrieb, bei dem alle Zylinder aktiviert sind, und im Teilmotorbetrieb, bei dem mindestens ein Zylinder abgeschaltet ist, erfolgen kann. Dabei kann im Teilmotorbetrieb - unter Beibehaltung der Anzahl abgeschalteter Zylinder - ein Zylinderwechsel bei den abgeschalteten Zylindern vorgenommen werden.

Aus der deutschen Offenlegungsschrift DE 195 32 159 A1 ist eine Brennkraftmaschine bekannt, bei der, wenn von einem Voll-Zylinder-Betrieb zu einem Teil-Zylinder-Betrieb geschaltet wird, in dem eine zweite Zylindergruppe im Leerlauf läuft, die Summe der Last der beiden Zylindergruppen im Wesentlichen auf der gleichen Last gehalten wird wie die gesamte Last war, bevor in den Teil-Zylinder-Betrieb geschaltet wurde.

Aus der deutschen Offenlegungsschrift DE 10 2004 033 231 A1 ist eine Brennkraftmaschine bekannt, bei der unmittelbar vor einer Abschaltung oder unmittelbar nach einer Zuschaltung mindestens eines Zylinders, die Drosselklappen der Zylinderbänke voneinander verschieden so eingestellt werden, dass im Mittel eine Zylinderfüllung resultiert, die dem Betrieb vor Änderung des Betriebszustands entspricht. Erst dann folgt durch entsprechendes Öffnen der einen Drosselklappe und entsprechendes Schließen der anderen Drosselklappe eine Änderung des Betriebszustands.

Aus der deutschen Offenlegungsschrift DE 196 04 737 A1 ist eine Brennkraftmaschine bekannt, bei der bei einer Änderung eines Betriebszustands bereits zugeschaltete Zylinder weiter betrieben werden und vorher abgeschaltete Zylinder neu zugeschaltet werden. Dabei werden die bereits zugeschalteten Zylinder in Volllast betrieben und die neu zugeschalteten Zylinder, durch ein eigenes Drosselsystem regelbar, entsprechend der geforderten Last der Brennkraftmaschine zusätzlich betrieben.

Die US-amerikanische Offenlegungsschrift US 2003 010 65 24 A1 beschreibt eine Brennkraftmaschine, bei der vor einer Zuschaltung von Zylindern die Nockenwelle so verstellt wird, dass durch eine entsprechende Zylinderfüllung keine Momentenstöße bei einer Änderung des Betriebszustands resultieren.

Das US-Patent US 4 550 704 beschreibt eine Brennkraftmaschine mit einer Drosselklappe für alle Zylinder.

Aus der Offenlegungsschrift DE 10 2013 213 697 A1 ist eine Brennkraftmaschine bekannt, bei der im Teillastbetrieb eine Zylinderbank abgeschaltet wird und die Anzahl der aktiven Zylinder in einer Zylinderbank abhängig von der Motorlast gewählt wird.

Eine stufenweise einzelne Zuschaltung von einzelnen Zylindern bringt bei dem beschriebenen Problem keine Abhilfe, da dennoch Momentenstöße auftreten.

Eine Abmagerung des Gemisches und damit verbunden eine Reduzierung der Brennstoffleistung ist bei Otto-Motoren nicht oder nur in sehr geringen Grenzen möglich, da die Gefahr von Zündaussetzern besteht. Bei einem Abmagern des Gemisches auf Werte, bei welchen dieses noch sicher brennbar ist, treten trotzdem die beschriebenen Momentenstöße auf.

Die Momentenstöße sind insbesondere deshalb unerwünscht, weil sie Belastungen des Antriebsstrangs mit sich bringen. Weiterhin wird die Laufruhe der Brennkraftmaschine verschlechtert und es besteht die Möglichkeit von Drehzahlschwankungen.

Der Erfindung liegt die Aufgabe zugrunde, ein Verfahren zum Betrieb einer Brennkraftmaschine der eingangs genannten Art zu schaffen, welches bei einfacher Ausgestaltung und einfacher, betriebssicherer Anwendbarkeit Momentenstöße verhindert.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit ein Verfahren zum Betrieb einer Brennkraftmaschine, insbesondere eines Gasmotors, insbesondere eines Otto-Motors, geschaffen worden. Dieses Verfahren wird insbesondere bei einer Brennkraftmaschine eingesetzt, welche zwei Zylinderbänke mit jeweils mehreren Zylindern umfasst, beispielsweise mit jeweils sechs Zylindern. Erfindungsgemäß wird jeder Zylinderbank unabhängig Ladedruck zugeführt. Eine aktive Zylinderabschaltung erfolgt mittels einer üblichen Vorrichtung, die beispielsweise den Zündkreislauf und/oder eine Kraftstoffzufuhr unterbricht. Erfindungsgemäß ist bei dem Verfahren vorgesehen, dass bei einem Wechsel von einem Betriebszustand mit zumindest einem abgeschalteten Zylinder zu einem Betriebszustand mit zumindest einem weiteren zugeschalteten Zylinder der Ladedruck vor der Zuschaltung des weiteren Zylinders reduziert wird.

Erfindungsgemäß erfolgt somit eine Absenkung des Ladedrucks und somit eine Leistungsverminderung bei den bisher aktiven Zylindern, bevor die zusätzlichen Zylinder wieder aktiviert werden. Diese kurzfristige Absenkung des Ladedrucks bzw. diese kurzfristige Verminderung der Leistung verhindert, dass die dann zusätzlich aktivierten Zylinder zu Beginn ihrer Zuschaltung mit der vollen, vorher für die ursprünglichen aktiven Zylinder eingestellten Leistung betrieben werden. Auf diese Weise wird ein Momentenstoß verhindert.

Erfindungsgemäß kann dann nachfolgend die Leistung der Brennkraftmaschine in üblicher Weise angepasst werden, ohne dass Momentenstöße auftreten und ohne dass die Laufruhe des Motors beeinträchtigt wird.

Die Durchführung des erfindungsgemäßen Verfahrens vermeidet somit, wie erwähnt, Momentenstöße bei der Zuschaltung zusätzlicher vorher deaktivierter Zylinder. Ein weiterer Vorteil liegt darin, dass eine gute Laufruhe der Brennkraftmaschine ohne Drehzahlschwankungen sichergestellt wird.

Erfindungsgemäß kann somit beim Wechsel der Anzahl der aktiven Zylinder eine konstante Leistung der Brennkraftmaschine sichergestellt werden.

Besonders vorteilhaft ist es, wenn die Änderung des Ladedrucks auf den erforderlichen Wert erfolgt, welcher beim Betrieb nach der Umschaltung bzw. Aktivierung der Zylinder erforderlich ist. Das erfindungsgemäße Verfahren ist somit einfach durchführbar, da keine zusätzlichen Regelungsgrößen oder Ähnliches berücksichtigt werden müssen.

Um sicherzustellen, dass kein Momentenstoß auftritt, erfolgt in vorteilhafter Weiterbildung des erfindungsgemäßen Verfahrens die Aktivierung oder Zuschaltung des einen oder der mehreren zusätzliche Zylinder erst nach Erreichen oder nach Einregulierung des reduzierten Ladedrucks. Dies sichert die momentenstoßfreie Umschaltung.

Erfindungsgemäß wird das Verfahren bei einem Übergang von einem Betriebszustand mit mehreren aktiven Zylindern auf einen Betriebszustand mit zumindest einem abgeschalteten Zylinder durchgeführt. Es wird dann kurzfristig der Ladedruck erhöht, um eine konstante Leistung der Brennkraftmaschine auch bei reduzierter Anzahl aktiver Zylinder zu gewährleisten.

Bevorzugterweise erfolgt die Änderung des Ladedrucks innerhalb der Grenzen einer Schalthysterese der Brennkraftmaschine, welche sich beim Aktivieren oder Deaktivieren von Zylindern ergibt.

Die Änderung des Ladedrucks kann erfindungsgemäß auch durch eine Änderung der Stellung einer der jeweiligen Zylinderbank zugeordneten Drosselklappe erfolgen. Somit kann das Verfahren auch bei einer Brennkraftmaschine mit Saugrohren angewendet werden.

Eine Brennkraftmaschine mit zwei zueinander parallel wirkenden Zylinderbänken wird vielfach so betrieben, dass erfindungsgemäß bei Aktivierung nur einer begrenzten Anzahl von Zylindern zwischen den einzelnen Zylinderbänken umgeschaltet oder gewechselt wird. Auch hierbei ist das erfindungsgemäße Verfahren in vorteilhafter Weise einsetzbar.

Brennkraftmaschinen mit zwölf Zylindern, die in zwei Zylinderbänken angeordnet sind, können im unteren Kennfeldbereich oder im Leerlauf mit lediglich drei der zwölf Zylinder betrieben werden. Bei einer gewünschten Leistungserhöhung werden dann drei zusätzliche, vorher deaktivierte Zylinder zugeschaltet, so dass sich ein Betrieb mit sechs Zylindern ergibt. Bei einer nochmaligen Leistungserhöhung können dann alle zwölf Zylinder aktiviert werden. Insbesondere bei derartigen Vorgängen ist das erfindungsgemäße Verfahren besonders vorteilhaft einsetzbar.

Im Folgenden wird die Erfindung anhand eines Ausführungsbeispiels in Verbindung mit der Zeichnung beschrieben. Dabei zeigt:
- Fig. 1: eine schematische Darstellung einer Brennkraftmaschine mit zwei Zylinderbänken mit jeweils sechs Zylindern in unterschiedlicher Aktivierung,
- Fig. 2: eine graphische Darstellung der Abhängigkeit der Drosselklappenstellung bzw. des Ladedrucks von der Zeit bei Durchführung des erfindungsgemäßen Verfahrens, und
- Fig. 3: eine graphische Darstellung der Drehzahl und des auftretenden Moments bei Betrieb mit unterschiedlichen Zylinderzahlen.

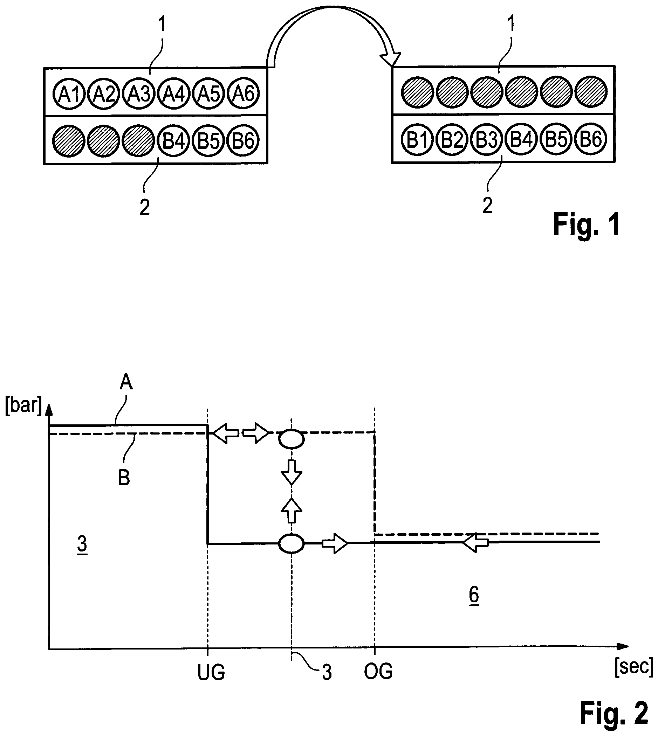

Die Fig. 1 zeigt in der vereinfachten Draufsicht eine erfindungsgemäße Brennkraftmaschine, welche zwei zueinander parallele Zylinderbänke 1, 2 aufweist. In jedem der Zylinderbänke 1, 2 sind jeweils sechs Zylinder vorgesehen, die mit A1 bis A6 und B1 bis B6 bezeichnet sind. In der linken Darstellung der Fig. 1 ist ersichtlich, dass lediglich drei Zylinder aktiviert sind, nämlich die Zylinder B1, B2 und B3. Bei einer Umschaltung des Betriebes werden nachfolgend sechs Zylinder aktiviert, nämlich die Zylinder A1 bis A6 der Zylinderbank 1. Die Zylinder der Zylinderbank 2 sind deaktiviert, ebenso wie in der linken Bildhälfte der Fig. 1 sämtliche Zylinder A1 bis A6 der Zylinderbank 1 deaktiviert sind.

Die Fig. 2 zeigt ein Diagramm, bei welchem auf der Abszisse die Zeit eingetragen ist, während die Ordinate die Drosselklappenstellung in Prozent bzw. den Ladedruck in bar wiedergibt. Auf der Abszisse ist die Schalthysterese bei der Aktivierung bzw. Deaktivierung der Zylinder mit der linken unteren Grenze UG und der rechten oberen Grenze OG dargestellt. Der rechte Bereich der Fig. 2 zeigt mit der Zahl 6 einen Sechs-Zylinder-Betrieb, während der linke Bereich mit der Zahl 3 einen Drei-Zylinder-Betrieb der in Fig. 1 gezeigten Brennkraftmaschine darstellt. Die durchgezogene Linie ist mit A bezeichnet und gibt die Zylinderbank 1 mit den Zylindern A1 bis A6 wieder, während die gestrichelte Linie, welche mit B dargestellt ist, die Zylinderbank 2 mit den Zylindern B1 bis B6 repräsentiert.

Das Bezugszeichen 3 auf der Abszisse zeigt die gestrichelte Linie, welche den Übergang von drei auf sechs Zylinder und damit den Schaltpunkt von drei auf sechs Zylinder, gemäß der Darstellung in Fig. 1, wiedergibt. Bei einem Übergang von Drei-Zylinder-Betrieb auf Sechs-Zylinder-Betrieb wird erfindungsgemäß der Ladedruck bzw. die Drosselklappenstellung bei Erreichen des Schaltpunktes (ovaler Kreis) auf der gestrichelten Linie abgesenkt, um den Wert des Schaltpunkts (ovaler Kreis) auf der durchgezogenen Linie des Sechs-Zylinder-Betriebs einzunehmen. Nachfolgend erfolgt eine Aktivierung der zusätzlichen Zylinder gemäß der Darstellung der rechten Bildhälfte von Fig. 1.

In analoger Weise erfolgt, ausgehend von einem Sechs-Zylinder-Betrieb, eine Erhöhung des Ladedrucks bzw. eine Vergrößerung der Drosselklappenstellung (Öffnung) bei Erreichen des Schaltpunktes und vor der Deaktivierung dreier Zylinder und dem Übergang auf den Drei-Zylinder-Betrieb.

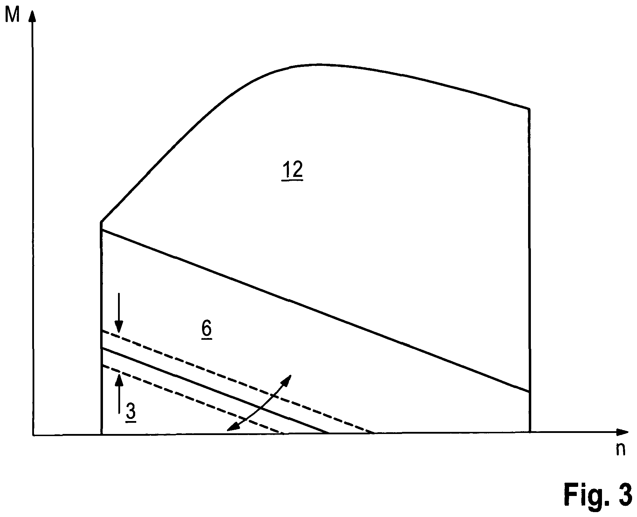

Die Fig. 3 zeigt auf der Abszisse die Drehzahl n und auf der Ordinate das Drehmoment M. Insgesamt ist schematisch ein Motorkennfeld dargestellt, welches im oberen Bereich mit der Zahl 12 einen Zwölf-Zylinder-Betrieb wiedergibt. Die Zahl 6 kennzeichnet einen Sechs-Zylinder-Betrieb, während die Zahl 3 einen Drei-Zylinder-Betrieb darstellt. Zwischen den gestrichelten Linien ergibt sich die in Fig. 2 gezeigte Schalthysterese, wobei die beiden Pfeile den Übergang von Drei-Zylinder-Betrieb zum Sechs-Zylinder-Betrieb wiedergeben.

## Patentansprüche

1. Verfahren zum Betrieb einer Brennkraftmaschine, insbesondere eines Gasmotors, mit zwei Zylinderbänken (1, 2) mit jeweils mehreren Zylindern (A1 bis A6, B1 bis B6),
wobei jeder Zylinderbank (1, 2) eine Drosselklappe zugeordnet ist,
wobei durch eine Änderung der Stellung der jeweiligen Zylinderbank (1, 2) zugeordneten Drosselklappe
jeder Zylinderbank (1, 2) unabhängig Ladedruck zugeführt wird, sowie mit einer Vorrichtung zur aktiven Zylinderabschaltung zumindest eines Zylinders jeder Zylinderbank (1, 2),
wobei in einem Betriebszustand sämtliche Zylinder in einer ersten Zylinderbank (1) deaktiviert sind und in einer zweiten Zylinderbank (2) eine Anzahl Zylinder aktiv sind,
wobei bei einem Übergang von dem einen Betriebszustand zu einem anderen Betriebszustand ein Wechsel der aktiven Zylinder von einer Zylinderbank zur anderen durchgeführt wird,
wobei beim Übergang von dem einen Betriebszustand zu einem anderen Betriebszustand ein Wechsel der Anzahl der aktiven Zylinder erfolgt,
wobei bei dem Übergang von dem einen Betriebszustand zu dem anderen Betriebszustand
eine Änderung des Ladedrucks auf den erforderlichen Wert erfolgt, welcher beim Betrieb nach dem Übergang des Betriebszustands erforderlich ist,
wobei die nach dem Wechsel aktiven Zylinder erst nach Erreichen oder nach Einregulierung des erforderlichen Werts des Ladedrucks aktiviert werden,
wobei der Ladedruck mit einer Verringerung der Anzahl der aktiven Zylinder erhöht und mit einer Erhöhung der Anzahl der aktiven Zylinder verringert wird.

2. Verfahren nach Anspruch 1, **dadurch gekennzeichnet, dass** die Änderung des Ladedrucks innerhalb der Grenzen einer Schalthysterese der Brennkraftmaschine erfolgt, welche sich beim Aktivieren oder Deaktivieren von Zylindern ergibt.

3. Verfahren nach einem der Ansprüche 1 oder 2, **dadurch gekennzeichnet, dass** das Verfahren bei einer Brennkraftmaschine mit jeweils sechs Zylindern in jeder Zylinderbank durchgeführt wird.

4. Verfahren nach Anspruch 3, **dadurch gekennzeichnet, dass** das Verfahren bei einem Übergang des Betriebs von drei auf sechs Zylindern durchgeführt wird.

## Claims

1. Method for operating an internal combustion engine, in particular a gas engine, having two cylinder banks (1, 2) with in each case a plurality of cylinders (A1 to A6, B1 to B6),
wherein each cylinder bank (1, 2) is assigned a throttle valve,
wherein, by changing the position of the throttle valve assigned to the respective cylinder bank (1, 2), boost pressure is assigned independently to each cylinder bank (1, 2), and having an apparatus for active cylinder deactivation of at least one cylinder of each cylinder bank (1, 2),
wherein, in one operating state, all of the cylinders in a first cylinder bank (1) are deactivated and a number of cylinders in a second cylinder bank (2) are active,
wherein, during a transition from the one operating state to another operating state, a change of the active cylinders from one cylinder bank to the other is carried out,
wherein, during the transition from the one operating state to another operating state, the number of active cylinders is changed,
wherein, during the transition from the one operating state to the other operating state, the boost pressure is changed to the required value which is required during the operation after the transition of the operating state,
wherein the cylinders active after the change are activated only after the required value of the boost pressure is reached or set,
wherein the boost pressure is increased with a reduction in the number of active cylinders and is reduced with an increase in the number of active cylinders.

2. Method according to Claim 1, **characterized in that** the change in the boost pressure takes place within the limits of a switching hysteresis of the internal combustion engine which results in the case of activation or deactivation of cylinders.

3. Method according to either of Claims 1 and 2, **characterized in that** the method is carried out in an internal combustion engine having in each case six cylinders in each cylinder bank.

4. Method according to Claim 3, **characterized in that** the method is carried out during a transition of the operation from three to six cylinders.

## Revendications

1. Procédé pour le fonctionnement d'un moteur à combustion interne, en particulier d'un moteur à essence, comprenant deux rangées de cylindres (1, 2) comprenant chacune plusieurs cylindres (A1 à A6, B1 à B6),
un clapet d'étranglement étant associé à chaque rangée de cylindres (1, 2),
une pression de charge étant acheminée indépendamment à chaque rangée de cylindres (1, 2) par une variation de la position du clapet d'étranglement associé à la rangée de cylindres respective (1, 2), et comprenant un dispositif pour la coupure de cylindre active d'au moins un cylindre de chaque rangée de cylindres (1, 2),
dans un état de fonctionnement, tous les cylindres dans une première rangée de cylindres (1) étant désactivés, et dans une deuxième rangée de cylindres (2), un certain nombre de cylindres étant actifs, dans le cas d'une transition de l'un des états de fonctionnement à un autre état de fonctionnement, un changement des cylindres actifs d'une rangée de cylindres à l'autre étant effectué,
lors de la transition de l'un des états de fonctionnement à un autre état de fonctionnement, un changement du nombre des cylindres actifs étant effectué,
lors de la transition de l'un des états de fonctionnement à l'autre état de fonctionnement, une variation de la pression de charge à la valeur requise étant effectuée, laquelle est requise dans le cas du fonctionnement après la transition de l'état de fonctionnement,
les cylindres actifs après le changement étant seulement activés après l'obtention ou après l'ajustement par réglage de la valeur requise de la pression de charge,
la pression de charge augmentant avec une réduction du nombre des cylindres actifs et étant réduite avec une augmentation du nombre des cylindres actifs.

2. Procédé selon la revendication 1, **caractérisé en ce que** la variation de la pression de charge s'effectue à l'intérieur des limites d'une hystérésis de commutation du moteur à combustion interne, qui s'obtient lors de l'activation ou de la désactivation de cylindres.

3. Procédé selon l'une des revendications 1 et 2, **caractérisé en ce que** le procédé est mis en œuvre dans le cas d'un moteur à combustion interne ayant dans chaque cas six cylindres dans chaque rangée de cylindres.

4. Procédé selon la revendication 3, **caractérisé en ce que** le procédé est mis en œuvre dans le cas d'une transition du fonctionnement de trois à six cylindres.
